# EUROPÄISCHE PATENTSCHRIFT

(11) **EP 3 206 973 B1**
(45) Veröffentlichungstag und Bekanntmachung des Hinweises auf die Patenterteilung: **08.12.2021**
(21) Anmeldenummer: 15778676.5
(22) Anmeldetag: 12.10.2015
(51) Int. Cl.: B65G 47/51, B65G 1/06

(54) **PRODUKTFLUSSREGULATOR**
PRODUCT FLOW REGULATOR
RÉGULATEUR DE FLUX DE PRODUITS

(30) Priorität: 13.10.2014 CH 15572014
(43) Veröffentlichungstag der Anmeldung: 23.08.2017
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2015/073575
(87) Internationale Veröffentlichungsnummer: WO 2016/058997

(56) Entgegenhaltungen:
- EP-A1- 1 586 520
- WO-A1-2007/041996
- US-A1- 2007 125 727
- US-B1- 7 381 022

## Beschreibung

Die Erfindung betrifft einen Produktflussregulator zum Zwischenspeichern von Produkten mit einem Gestell, Fördermitteln und Produkteträgergondeln, die mit Produkten von einem Produkteinlaufbereich zu einem Produktauslaufbereich und leer zurück gefördert werden.

Produktflussregulatoren kommen zumeist zum Einsatz wenn frisch produzierte Stückgüter wie z. B. Schokoladetafeln, Schokoriegel und Biscuits zu einer Verpackungsanlage gefördert werden sollen. Diese Stückgüter werden in Reihen produziert und sollen auf kürzestem Weg zur Verpackungsmaschine gelangen. Nun ist es so, dass der Verpackungsprozess mit Störungen und Unterbrechungen behaftet sein kann. Auf der anderen Seite sollte das Produkt mit konstanter Geschwindigkeit kontinuierlich produziert werden, denn so kann eine gleich bleibende Qualität erreicht werden. Um diese Problematik zu beherrschen, kommen Produktflussregulatoren zwischen Produktion und Verpackung zum Einsatz, wie beispielsweise in EP 1586520 beschrieben. Der dort als Zwischenspeicher bezeichnete Produktflussregulator kann bei Unterbrechungen in der nachgeschalteten Verpackungsanlage die konstant weiterlaufende Produktion an Produktreihen für eine gewisse Zeit aufnehmen. Diese Menge an Produkt wird im Produktflussregulator zwischengepuffert, um dann bei erneutem Anlaufen der Verpackungsanlage an diese mit einer höheren Geschwindigkeit abgegeben werden zu können. Dies erfolgt während der Produktion im sog. "first-in-first-out"-Prinzip und vermeidet den Ausschuss von wertvollem Produkt.

Die frisch produzierten Produktreihen werden am Einlauf des Produktflussregulators auf Produkteträgertablare gefördert. Diese Produkteträgertablare sind in einer bestimmten Anzahl übereinander angeordnet und gruppenweise konstruktiv zu einer als Transportgestell bezeichneten Produkteträgergondel zusammengefasst. Diese Produkteträgergondeln werden im Allgemeinen beidseitig mit paarweise angeordneten umlaufenden Ketten und Vorrichtungen vom Einlauf in den Produktflussregulator zu dessen Auslauf bewegt und bei Unterbrechungen der Verpackung auch aufgestaut. Die Stauzone mit Produkt befindet sich zumeist im oberen Bereich des Produktflussregulators vor dessen Auslauf. Im Auslauf des Produktflussregulators werden die Produkteträgergondeln entladen und die Produkte über Förderbänder auf die nachgeschalteten Verpackungsmaschinen beschickt. Die entleerten Produkteträgergondeln gelangen dann im unteren Bereich des Produktflussregulators über eine Stauzone wieder zurück an dessen Einlauf, um dann erneut mit Produktreihen beladen zu werden. Somit definiert sich der Produktflussregulator immer durch einen Einlaufbereich in dem die Produkteträgergondeln mit Produkt beladen werden, eine obere Stauzone, durch die Unterbrechungen und Störungen der nachgeschalteten Verpackungsanlage kompensiert werden, und einen Auslaufbereich bei dem die Produktreihen zur Verpackungsanlage entladen werden, sowie einer Stauzone im unteren Rücklauf, wo die entleerten Produkteträgergondeln auf ihre erneute geschwindigkeitsabhängige Beladung warten. Somit hat der Produktflussregulator eine bestimmte Anzahl an Produkteträgergondeln, die zirkulär umgewälzt werden und dabei jeweils am Einlauf mit Produktreihen beladen werden und am Auslauf entladen werden.

Die beispielsweise aus EP 1586520 (die eine Vorrichtung gemäß dem Oberbegriff des Anspruchs 1 offenbart) DE 60308229 und anderen Druckschriften bekannten Systeme arbeiten alle mit einfachen Produkteträgergondeln, die mit einem sehr hohen mechanischen und elektrischen Aufwand zirkulär umgewälzt werden. Das bedeutet, dass die ganze notwendige Mechanik, um die einfache Gondel zirkulär umzuwälzen, ortsfest in jedem Funktionsbereich der Maschine lokalisiert ist. Hierfür ist eine grosse Anzahl von Antrieben mit der dazugehörigen Sensorik notwendig, sowie ein hoher Aufwand für deren elektrische Steuerung und elektrische Installation.

Bei den bekannten Systemen besteht auch der Nachteil, dass bei jedem Richtungswechsel von vertikal zu horizontal und umgekehrt ein Umsetzen der Gondeln von einem Förderer zum nächsten erfolgen muss. Diese Umsetzbewegungen beeinträchtigen die Leistung der Anlage, weil dieser Vorgang eine gewisse Zeit in Anspruch nimmt, während dessen die Zirkulation der Produkteträgergondeln unterbrochen werden muss.

Ein weiterer Nachteil der bekannten Systeme besteht darin, dass das herkömmliche mechanische Aufstauen der Produkteträgergondeln Lärm und mechanischen Stress auf die Gondeln verursacht und durch damit verursachte Vibrationen und Schwingungen auch Stress auf das Produkt selber.

Der Erfindung liegt die Aufgabe zugrunde einen Produktflussregulator zu konzipieren, der ohne diesen grossen Aufwand auskommt und die genannten Nachteile vermeidet.

Erfindungsgemäss wird diese Aufgabe dadurch gelöst, dass die Gondeln mit individuellen unabhängigen Antriebseinrichtungen und eigener Sensorik ausgestattet sind und eigengesteuert auf ortsfesten Führungs- und Transportschienen umlaufen.

Der vorgeschlagene neue Produktflussregulator funktioniert somit nach einem anderen Prinzip als die aus dem Stand der Technik bekannten Zwischenspeicher. Die den Transport der Gondeln bewirkende Anlage mit Gestell, Förderketten, Antrieben etc. wird ersetzt durch ein Gestell, das nur noch ortsfeste Führungs- und Förderschienen aufweist, auf denen die Gondeln umlaufen. Demgegenüber sind die Produkteträgergondeln so konzipiert und konstruktiv so ausgebildet, dass sie sich eigengesteuert durch den Produktflussregulator bewegen.

Im Produktflussregulatorgestell wird beidseitig eine stationäre umlaufende Führungsbahn installiert. In diese Führungsbahn werden die mobilen Produkteträgergondeln aufgenommen und sind dann entlang dieser Führungsbahn eigengesteuert bewegbar.

Jede Produkteträgergondel wird beidseitig mit Antriebs -und Führungsmitteln ausgestattet, die es ermöglichen, dass jede Produkteträgergondel individuell durch die verschiedenen Funktionszonen des Produktflussregulators entlang dieser Führungsbahn bewegt werden kann. Die Form dieser umlaufenden Führungsbahn ist bezüglich Höhe und Länge beliebig. Somit können vorhandene Räumlichkeiten optimal ausgenutzt werden.

Unterhalb des Auslaufs des Produktflussregulators besteht die Möglichkeit, definiert und automatisiert, durch Öffnen der Führungsbahn, einzelne Produkteträgergondeln herauszufahren und auch wieder einzuschleusen. Dies wird oft genutzt, wenn die Produkteträgergondeln extern gereinigt werden sollen. Der Einschleus -und Ausschleusprozess einzelner Produkteträgergondeln kann auch während des Betriebs erfolgen.

Durch das neue Konzept können die Produkteträgergondeln individuell kontinuierlich entlang der Führungsbahn bewegt und angehalten werden. Der erforderliche Stau in den Stauzonen erfolgt definiert, ohne dass sich die einzelnen Produkteträgergondeln mechanisch berühren. Die Richtungswechsel von vertikal auf horizontal und umgekehrt können kontinuierlich erfolgen, ohne mechanisch komplizierte Umsetzbewegungen. Durch die berührungslose Staumöglichkeit der Produkteträgergondeln kann auf die notwendige Staumechanik wie Unterbrechungs-- und Vereinzelungseinrichtungen verzichtet werden. Diese gravierenden Nachteile werden durch das vorgeschlagene Konzept systematisch vermieden und somit auch nicht mehr relevant.

Im Folgenden werden anhand der beiliegenden Zeichnungen bevorzugte Ausführungsbeispiele des erfindungsgemässen Produktflussregulators beschrieben. Es zeigen:
- Fig. 1a-c: eine schematische Darstellung eines Produktflussregulators in drei Ansichten
- Fig. 2: eine vergrösserte Darstellung der Führungs- und Antriebseinrichtung einer Gondel
- Fig. 3: eine weitere Ausführungsform der Führungs- und Antriebseinrichtung
- Fig. 4: eine schematische Darstellung einer Ausführungsvariante der Anlage
- Fig. 5: eine schematische Darstellung einer weiteren Ausführungsvariante der Anlage

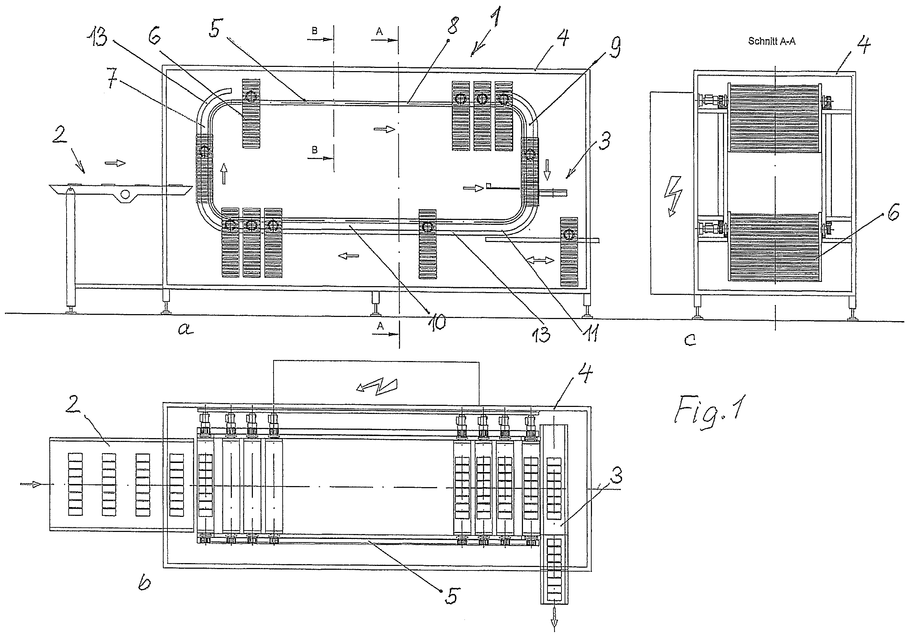

In der Seitenansicht der Fig. 1a ist wie bei den bekannten Produktflussregulatoren ein Produktflussregulator 1 zwischen einem Produkteinlaufband 2 und einem Produktauslaufband 3 gezeigt. Die Fig. 1b zeigt eine Draufsicht der Anlage und Fig. 1c einen Schnitt entlang der Ebene A-A der Fig. 1a. Auf dem Produkteinlaufband kommen die Produkte von der Herstellung an und auf dem werden sie zur Verpackungsanlage weiter gefördert. Im Produktflussregulator werden sie, wie bekannt, zwischengespeichert.

Der Produktflussregulator besitzt ein Gestell 4, an dem eine stationäre umlaufende Führungsbahn 5 angeordnet ist. Entlang dieser Führungsbahn bewegen sich Produktträgergondeln 6, die in an sich bekannter Weise mit einer Anzahl von Produktträgertablaren ausgestattet sind. Im Unterschied zu den bekannten Produktflussregulatoren sind die einzelnen Gondeln nicht mit einer umlaufenden Antriebsmechanik, wie z. B. Förderketten verbunden, sondern bewegen sich unabhängig voneinander.

Die Führungsbahn besitzt eine auf der Seite des Produkteinlaufs befindliche vertikale Aufstiegsstrecke 7, eine daran anschliessende horizontale Wartestrecke 8 für gefüllte Gondeln, daran anschliessend eine auf der Seite des Produktauslaufs befindliche Abstiegsstrecke 9 und eine im unteren Bereich des Gestells angeordnete Wartestrecke 10 für leere Gondeln. Die Führungsbahn ist geschlossen, besitzt aber zwischen der Abstiegsstrecke und der unteren Wartestrecke eine Weiche 11 bei der einzelne Gondeln ausgeschleust werden können.

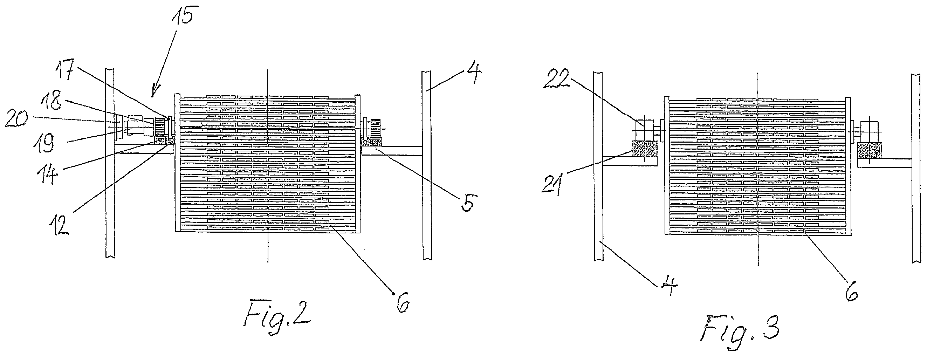

Die Führungsbahn besitzt eine umlaufende Führungsschiene 12, mit der die Gondeln geführt werden. Entsprechend sind die Gondeln mit Führungsrollen 17 ausgestattet, wie nachfolgend anhand der Fig. 2 und 3 näher beschrieben wird. In den vertikalen Strecken und der unteren horizontalen Strecke ist eine zusätzliche Führungsschiene 13 vorgesehen, so dass dort die Führungsrollen der Gondeln beidseits geführt werden.

Die Führungsbahn weist ausserdem eine neben der Schiene angeordnete umlaufende Zahnschiene 14 auf, in welche ein Antriebsrad 18 der Gondel formschlüssig eingreift.

Jede Gondel ist mit einer eigenen unabhängigen Führungs- und Antriebseinrichtung 15 versehen, die etwa im oberen Drittel der Gondel angeordnet ist. Eine Ausführungsform dieser Führungs- und Antriebseinrichtung einer Gondel ist in Fig. 2 gezeigt. Auf einer durchgehenden Antriebswelle 16 ist beidseits der Gondel je eine frei drehbare Führungsrolle 17 und eine drehfest mit der Welle verbundene Antriebsrolle 18 angeordnet. Die Führungsrolle läuft, wie bereits erwähnt auf der Führungsschiene, und die Antriebsrolle greift in die Zahnschiene ein. An einem Ende der Antriebswelle ist ein Servomotor 19 angeordnet, der die Welle antreibt. Gegenüber der Aussenseite des Motors ist eine Stromschiene 20 am Gestell angebracht, die den Motor mit Strom versorgt, vorzugsweise kontaktlos.

Die Zahnschiene ist aus einem elastomeren Material in der art eines Zahnriemens ausgeführt. Selbstverständlich sind andere Ausführungen möglich.

Die für die Fortbewegung der Gondeln auf der Führungsbahn erforderlichen Befehle an den Servomotor werden in bekannter Weise über einen zentralen Rechner gesteuert.

In der in Fig. 3 gezeigten Ausführungsvariante dient die Führungsschiene 21 gleichzeitig der Stromversorgung. Der Antrieb erfolgt mit einem Linearmotor 22.

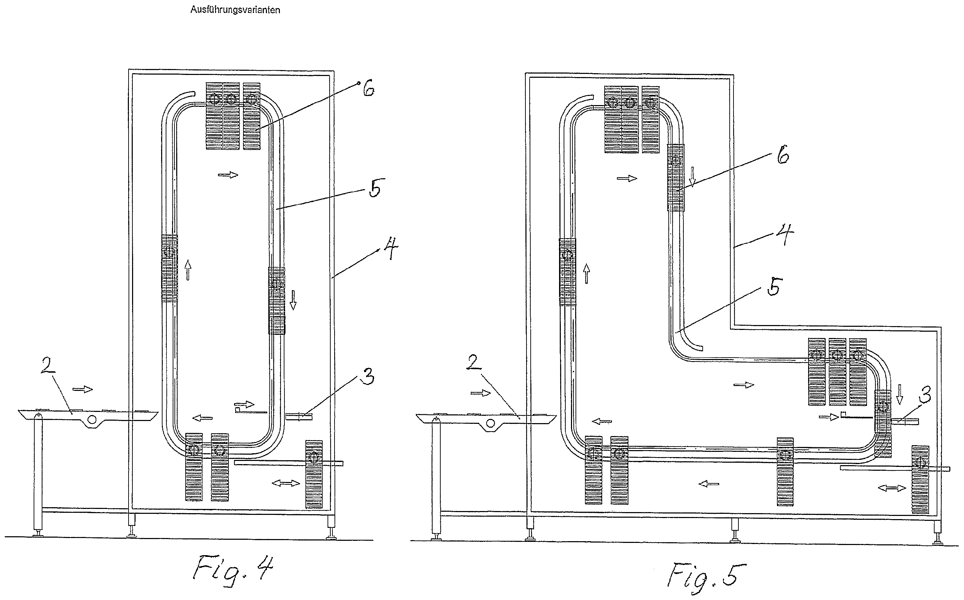

Die erfindungsgemässe Lösung mit unabhängig bewegten Produktträgergondeln hat den Vorteil, dass die Form der Anlage weitgehend beliebig gestaltet und damit sehr einfach den vorhandenen Raumverhältnissen angepasst werden kann. Fig. 4 zeigt eine Variante, in der das Gestell an einen schmalen hohen Raum angepasst ist. Hier können die vertikalen Strecken für die Warteposition der Gondeln mitbenutzt werden. Fig. 5 zeigt eine Variante, die an eine kompliziertere Raumform angepasst ist. Ein herkömmlicher Produktflussregulator mit an Ketten aufgehängten Gondeln wäre in einem solchen Raum kaum mit vernünftigem Aufwand einzubauen.

Ein weiterer Vorteil der erfindungsgemässen Lösung besteht darin, dass die Gondeln so geführt werden können, dass sie sich in den Wartepositionen nicht berühren. Dies sorgt für eine erhebliche Reduzierung des bei an Ketten aufgehängten Gondeln auftretenden erheblichen Lärms. Ausserdem sind durch den Wegfall der Umsetzvorgänge an den Übergängen von vertikalen zu horizontalen Kettensträngen bzw. Bahnen die auf das Produkt wirkenden Erschütterungen stark reduziert.

## Patentansprüche

1. Produktflussregulator zum Zwischenspeichern von Produkten mit einem Gestell, Fördermitteln und Produkteträgergondeln, die mit Produkten von einem Produkteinlaufbereich zu einem Produktauslaufbereich und leer zurück gefördert werden, **dadurch gekennzeichnet, dass** das Gestell mit einer stationären Führungsbahn ausgestattet ist, entlang der die Produkteträgergondeln eigengesteuert umlaufen.

2. Produktflussregulator nach Anspruch 1, **dadurch gekennzeichnet, dass** die Produkteträgergondeln beidseitig mit Antriebs -und Führungsmitteln ausgestattet sind, mittels denen sie individuell durch verschiedene Funktionszonen des Produktflussregulators entlang einer umlaufenden Führungsbahn bewegbar sind.

3. Produktflussregulator nach Anspruch 1, **dadurch gekennzeichnet, dass** die geometrische Form der umlaufenden Führungsbahn bezüglich Länge und Höhe beliebig ist.

4. Produktflussregulator nach Anspruch 1 **dadurch gekennzeichnet, dass** Mittel zum Öffnen der Führungsbahn vorhanden sind, bei denen Produkteträgergondeln ein- und ausschleusbar sind.

5. Produkteträgergondel zur Verwendung in einem Produktflussregulator nach einem der Ansprüche 1-4 **gekennzeichnet durch** beidseitig angeordnete Antriebsmittel.

6. Produkteträgergondel nach Anspruch 5, **gekennzeichnet durch** elektrische Steuer- und Regelungsmittel zur individuellen Führung entlang einer stationären umlaufenden Führungsbahn.

## Claims

1. Product flow regulator for temporarily storing products, having a frame, conveying means and product carrier gondolas, which are conveyed with products from a product inlet region to a product outlet region and are conveyed back empty, **characterized in that** the frame is equipped with a stationary guideway along which the product carrier gondolas circulate in a self-controlled manner.

2. Product flow regulator according to claim 1, **characterized in that** the product carrier gondolas are equipped on both sides with drive and guide means, by means of which they can be moved individually through different functional zones of the product flow regulator along a circulating guideway.

3. Product flow regulator according to claim 1, **characterized in that** the geometric shape of the circulating guideway is arbitrary in terms of length and height.

4. Product flow regulator according to claim 1, **characterized in that** there are means for opening the guideway, in which product carrier gondolas can be moved in and out.

5. Product carrier gondola for use in a product flow regulator according to any of claims 1-4, **characterized by** drive means arranged on both sides.

6. Product carrier gondola according to claim 5, **characterized by** electrical open-loop and closed-loop control means for individual guidance along a stationary circulating guideway.

## Revendications

1. Régulateur de flux de produits permettant de stocker temporairement des produits, comportant un châssis, des moyens de transport et des nacelles porte-produits, lesquelles sont transportées avec des produits d'une zone d'entrée de produit à une zone de sortie de produit et en reviennent vide, **caractérisé en ce que** le châssis est équipé d'un rail de guidage fixe le long duquel les nacelles porte-produits circulent de manière autonome.

2. Régulateur de flux de produits selon la revendication 1, **caractérisé en ce que** les nacelles porte-produits sont équipées des deux côtés de moyens d'entraînement et de guidage, au moyen desquels elles peuvent être déplacées individuellement à travers différentes zones fonctionnelles du régulateur de flux de produits le long d'un rail de guidage circulaire.

3. Régulateur de flux de produits selon la revendication 1, **caractérisé en ce que** la forme géométrique du rail de guidage circulaire est arbitraire en termes de longueur et de hauteur.

4. Régulateur de flux de produits selon la revendication 1, **caractérisé en ce que** des moyens d'ouverture du rail de guidage sont disponibles, à travers lesquels les nacelles porte-produits peuvent être entrées et sorties.

5. Nacelle porte-produits destinée à être utilisée dans un régulateur de flux de produits selon l'une quelconque des revendications 1 à 4, **caractérisée par** des moyens d'entraînement disposés des deux côtés.

6. Nacelle porte-produits selon la revendication 5, **caractérisée par** des moyens électriques de commande et de régulation permettant un guidage individuel le long d'un rail de guidage circulaire fixe.
